# EUROPEAN PATENT APPLICATION

(11) **EP 4 647 449 A1**
(43) Date of publication of application: **12.11.2025**
(21) Application number: 24175227.8
(22) Date of filing: 10.05.2024
(51) Int. Cl.: C08F 110/02

(54) **PROCESS FOR PREPARING POLYETHYLENE POWDER IN SLURRY POLYMERIZATION**

(71) Applicant: Basell Polyolefine GmbH, 50389 Wesseling (DE)
(72) Inventor: MIHAN, Shahram, 65926 Frankfurt a.M. (DE); MEIERHOEFER, Markus, 65926 Frankfurt a.M. (DE)
(74) Representative: LyondellBasell

(57) **Abstract**

A process for preparing a polymer powder in the presence of a polymerization catalyst in a slurry is provided. The polymer powder is an ethylene homo-or copolymer, whereby at least 70 wt.%, preferably at least 80 wt.% of the produced polymer powder particles have a particle diameter of less than 500 microns, wherein at least 40 wt.% of the produced polymer powder particles have a particle diameter from 125 microns to 250 microns, wherein less than 2.0 wt.%, preferably less than 1.5 wt.% of the produced polymer powder particles have a particle diameter of less than 63 microns, wherein the polymerization catalyst has a median mass diameter D₅₀ of less than 30 microns.

## Description

### FIELD OF THE DISCLOSURE

The present disclosure relates to a continuous process for the preparation of ethylene homopolymers or ethylene copolymers in the presence of a catalyst by slurry polymerization, whereby the resulting polyethylene is a fine powder.

### BACKGROUND OF THE DISCLOSURE

Homopolymers and copolymers of ethylene with higher alpha-olefins such as 1-butene, 1-pentene, 1-hexene or 1-octene may be prepared, for example, by polymerization in the presence of supported chromium compounds, known as Phillips catalysts. US 6,699,947 describes supported chromium catalysts and their preparation, whereby a support material is treated in suspension with a chromium salt solution and subsequently, after removing the solvent, is calcinated in an oxygen-containing atmosphere at temperatures above 300°C. Catalyst having a mean particle size of less than 100 µm can be obtained by grinding or comminuting, sieving or sifting either the support or the catalyst at any stage of preparation.

Suspension polymerization process have been known for a long time already. A process in which the polymerization is carried out in a loop reactor is described in WO2005/028098 and is particularly useful for the polymerization of ethylene and of ethylene together with other olefinic comonomers.

Many ethylene polymers and co-polymers are sold commercially as powder grades. These powder grades may be further processed, e.g. by sintering. The higher the amount of fine polymer in the polymer powder the shorter is the sintering time. Thus, there is a desire to produce very fine PE powders.

However, a high amount of fines, i.e. particles having a particle diameter of less than 32 µm is detrimental to the process stability. As smaller polymer particles are more susceptible to electrostatic charging. Such charged particles increase the risk of operability problems during polymerization by wall sheeting and reactor fouling, which will be noticed by the increased power input of the reactor pump. Particularly in ethylene polymerization, such high amount of fines implicate the risk of dust explosions due to electrostatic charging and/or conveying problems and, thus, is the reason for big technical problems during processing.

Thus, there is a need for a stable process for producing a fine polyethylene powder, which can be safely and efficiently processed.

### SUMMARY OF THE DISCLOSURE

The present disclosure provides a process for the continuous production of an ethylene polymer comprising polymerizing ethylene or copolymerizing ethylene and one or more other olefins in the presence of a catalyst in a slurry, wherein the polymerization catalyst has a median diameter D₅₀ of less than 30 µm, whereby at least 70 wt.%, preferably at least 80 wt. %, more preferably at least 90 wt.%, even more preferably at least 95 wt.% of the produced polymer particles have a particle diameter of less than 500 µm, wherein at least 40 wt.% of the produced polymer powder particles have a particle diameter from 125 µm to 250 µm and less than 2 wt %, preferably less than 1.5 wt.% of the produced polymer particles have a particle diameter of less than 63 µm.

The present disclosure further provides a polyethylene powder, whereby at least 70 wt.%, preferably at least 80 wt. %, more preferably at least 90 wt.%, even more preferably at least 95 wt.% of the produced particles have a particle diameter of less than 500 µm, wherein at least 40 wt.% of the produced polymer powder particles have a particle diameter from 125 µm to 250 µm and less than 2.0 wt.%, preferably less than 1.5 wt.% of the produced particles have a particle diameter of less than 63 µm.

Hereinafter, further developments are specified which are each themselves advantageous per se and can be combined with one another, independently from one another.

For example, in some embodiments, at least 95 wt.%, preferably at least 98 wt.% of the produced polymer powder may have a particle diameter of less than 500 µm. The polymer powder particles having a particle diameter of less than 63 µm may preferably amount to less than 1.5 wt.%, more preferably less than 1.0 wt.% of the produced polymer powder. In some embodiments, the polymer powder particles having a particle size of more than 1000 µm may be less than 1.5 wt.%, preferably less than 1.0 wt.%, more preferably less than 0.5 wt.%.

In some embodiments, the a fraction consisting of the polymer particles having a particle size of less than 125 µm may have a minimum ignition energy of more than 30 mJ, preferably more than 100 mJ, more preferably more than 1000 mJ up to 10000000 mJ.

The polyethylene powder may be produced in a series of polymerization reactors, in particular a series of at least two slurry reactors, preferably from 2 to 5 slurry reactors.

In some embodiments, the polyethylene powder may be produced in at least one slurry loop reactor. In loop reactors, the polymerization mix is pumped continuously through the cyclic reactor tube. Such circulation of the polymerization mix helps to approach an optimum homogenization of the reaction mix, it improves the catalyst distribution and also prevents sedimentation of the suspended polymer.

The slurry may comprise a solid content of at least 30 wt.%, preferably at least 30 wt.% up to 55 wt.%, more preferably at least 40 wt.% to less than 55 wt.%.

In some embodiments the polyethylene powder may comprise a median diameter D₅₀ of from 120 µm to 400 µm.

In some embodiments, the production rate of the polyethylene powder is at least 6 t/h up to about 9 t/h.

The polymerization catalyst may be a chromium type catalyst.

Preferably, the polymerization has a space time yield of at least 200 kg/m³h, preferably from 200 kg/m³h to 400 kg/m³h.

In some embodiments, the polymer powder has an ash content of less than 300 ppm, preferably from 100 to 280 ppm.

### DETAILED DESCRIPTION OF THE DISCLOSURE

The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, i.e., a meaning other than the broadest meaning understood by skilled artisans, such a special or clarifying definition will be expressly set forth in the specification in a definitional manner that provides the special or clarifying definition for the term or phrase. It must also be noted that, as used in the specification and the appended claims, the singular forms "a," "an," and "the" include plural references unless otherwise specified.

For example, the following discussion contains a non-exhaustive list of definitions of several specific terms used in this disclosure (other terms may be defined or clarified in a definitional manner elsewhere herein). These definitions are intended to clarify the meanings of the terms used herein. It is believed that the terms are used in a manner consistent with their ordinary meaning, but the definitions are nonetheless specified here for clarity.

As used herein, the term "comprising" has the broad standard meaning "including", "encompassing", or "containing". It includes the explicitly recited elements and also allows the presence of other elements not recited. In addition to this broad encompassing meaning, as used herein, the term "comprising" may also have the limiting meaning "consisting of". This means that any aspect or embodiment of the present application that is defined as comprising certain features, also includes the meaning of merely consisting of said features, whether this is explicitly stated or not. In addition, the term "comprising" may also have the meaning "consisting essentially of".

The expressions "polyethylene composition", "polyethylene", "ethylene polymer", and related terms are intended to embrace, as alternatives, both a single ethylene polymer and an ethylene polymer composition. The ethylene polymer can be a homopolymer or a copolymer.

As used herein, the term "copolymer" refers to a polyolefin that contains ethylene monomer units and at least one alpha-olefin monomer unit. As used herein, the term "a-olefin" or "alpha-olefin" means an olefin of the general formula CH2=CH-R, wherein R is a linear or branched alkyl containing from 1 to 10 carbon atoms. The α-olefin can be selected, for example, from 1-butene, 1-pentene, 1-hexene, 4-methyl-1-pentene, 1-octene, and the like.

As used herein, the terms "comonomer" or "comonomers" refers to the type or types of monomers that are the minor components in the polymer chain.

"Processability," as used herein, refers to how well a polymer composition can be formed into a cast of blown film of commercial quality or molded by injection or compression molding into a molded article of commercial quality at commercially acceptable rates using the equipment and conditions.

The term "pure" as used in reference to the feed stream refers to a feed that is 100% olefin, but does not mean that the feed contains only one type of olefin. Rather, a "pure" feed stream can have a mixture of olefins such as those with 2 to 10 carbons, and combinations thereof.

The terms "polyolefin-based" and "polyolefin-rich", in reference to materials, feed streams, or waste streams, are used interchangeably to refer to a mixture that is at least 80% polyolefin.

The term "molecular weight distribution" (MWD), which is also called Mz/Mw, is used herein to describe the percentage of different-chain-length molecule in a polymer. MWD is often used to indicate the processability and properties of polymers, with a wider MWD indicating a more easy to process resin under most conditions. Polydispersity index (PI) is strictly correlated with the MWD of the polymer. PI is obtained from the ratio between weight average molecular weight (Mw) and the number average molecular weight (Mn) obtained by high temperature Polymer Char gel permeation chromatography ("GPC"), also referred to as high temperature size exclusion chromatography (HT-SEC), equipped with a filter-based infrared detector, IR5, a four-capillary differential bridge viscometer, and a Wyatt 18-angle light scattering detector. Higher average molecular weight (Mz) is also obtained by HT-SEC and it provides an important dimension of the high molecular weight polymer chains.

As used herein the terms "adapted" and "configured" mean that the element, component, or other subject matter is designed and/or intended to perform a given function. Thus, the use of the terms "adapted" and "configured" should not be construed to mean that a given element, component, or other subject matter is simply "capable of" performing a given function but that the element, component, and/or other subject matter is specifically selected, created, implemented, utilized, programmed, and/or designed for the purpose of performing the function. It is also within the scope of the present disclosure that elements, components, and/or other recited subject matter that is recited as being adapted to perform a particular function may additionally or alternatively be described as being configured to perform that function, and vice versa.

All concentrations herein are by weight percent ("wt.%") unless otherwise specified.

The use of the word "a" or "an" when used in conjunction with the term "comprising" in the claims or the specification means one or more than one unless the context dictates otherwise.

The use of the term "or" in the claims is used to mean "and/or" unless explicitly indicated to refer to alternatives only or if the alternatives are mutually exclusive. Further, the term "and/or" placed between a first entity and a second entity means one of (1) the first entity, (2) the second entity, and (3) the first entity and the second entity. Multiple entities listed with "and/or" should be construed in the same manner, i.e., "one or more" of the entities so conjoined. Other entities may optionally be present other than the entities specifically identified by the "and/or" clause, whether related or unrelated to those entities specifically identified. Thus, as a non-limiting example, a reference to "A and/or B," when used in conjunction with open-ended language such as "comprising" may refer, in one form, to A only (optionally including entities other than B); in another form, to B only (optionally including entities other than A); in yet another form, to both A and B (optionally including other entities). These entities may refer to elements, actions, structures, steps, operations, values, and the like.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one form, to at least one, optionally including more than one, A, with no B present (and optionally including entities other than B); in another form, to at least one, optionally including more than one, B, with no A present (and optionally including entities other than A); in yet another form, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B and C," "at least one of A, B, or C," "one or more of A, B, and C," "one or more of A, B, or C" and "A, B, and/or C" may mean A alone, B alone, C alone, A and B together, A and C together, B and C together, A, B and C together, and optionally any of the above in combination with at least one other entity.

Any aspect, embodiment or feature of the disclosure described hereinabove or hereinbelow may be freely combined with any other aspect, embodiment or feature of the disclosure described hereinabove or hereinbelow.

The present disclosure provides a continuous process for the preparation of ethylene homopolymers or ethylene copolymers comprising polymerizing ethylene or copolymerizing ethylene and one or more other olefins in the presence of a chromium catalyst. Examples of olefins for copolymerization with ethylene are especially 1-olefins, i.e. hydrocarbons having terminal double bonds. The olefins can also be functionalized olefinically unsaturated compounds. Preference is given to linear or branched C₃-C₁₂-1-alkenes, in particular C₃-C₁₀-1-alkenes such as propylene, 1-butene, 1-pentene, 1-hexene, 1-heptene, 1-octene, 1-decene or branched C₂-C₁₀-1-alkenes such as 4-methyl-1-pentene or conjugated and nonconjugated dienes such as 1,3-butadiene, 1,4-hexadiene or 1,7-octadiene. Examples of olefins also include ones in which the double bond is part of a cyclic structure which can have one or more ring systems. Examples are cyclopentene, norbornene, tetracyclododecene or methylnorbornene or dienes such as 5-ethylidene-2-norbornene, norbornadiene or ethylnorbonadiene. It is also possible to polymerize mixtures of two or more olefins.

The process may be used for the homopolymerization or copolymerization of ethylene. Preferred comonomers are up to 20 wt.%, more preferably from 0.01 wt.% to 15 wt.% and especially from 0.05 wt.% to 12 wt.%, of C₃-C₈-1-alkenes, in particular 1-butene, 1-pentene, 1-hexene and/or 1-octene. In a preferred embodiment of the present disclosure, ethylene is copolymerized with 1-butene and/or with 1-hexene. Particular preference is given to a process in which ethylene is copolymerized with from 0.1 wt.% to 12 wt.% of 1-hexene and/or 1-butene.

The process of the present disclosure is a polymerization process carried out as a slurry polymerization. Such slurry polymerizations, which are also designated as suspension polymerizations, take place in a liquid medium which comprises a hydrocarbon diluent and in which the produced ethylene polymer is insoluble and forms solid particles. Depending on the conditions within the respective polymerization reactor, the otherwise liquid medium of the slurry can also be in supercritical state under the conditions within the polymerization reactor.

The polymerization may be conducted at temperatures in the range from 90 to 200°C, preferably from 95 to 150°C and particularly preferably from 100 to 110°C, and under pressures of from 0.1 to 20 MPa and particularly preferably from 4.35 to 5 MPa. The polymerization can be carried out batchwise or preferably continuously in one or more stages.

Examples of liquid media are isobutane, butane, propane, isopentane, pentane and hexane. The liquid medium is inert and liquid or supercritical under the reaction conditions and should have a boiling point which differs significantly from those of the monomers and comonomers, if applicable, used in order to make it possible to recover the starting materials from the product mixture by distillation. In some embodiments, a discharge ratio of liquid medium and polyethylene may be lower than 0.8, preferably between 0.3 to 0.8.

Processes of the present disclosure are preferably carried out in loop reactors or stirred tank reactors, most preferably the process is carried out in at least one loop reactor.

The loop reactor is generally composed of segments of pipe connected by smooth bends or elbows. The pipe, bends and elbows form a cyclic reactor tube having one or more ascending and one or more descending segments, which are surrounded by cooling jackets for removing the heat of reaction and also horizontal tube sections which connect the vertical segments. The lower tube section usually accommodates an axial pump, preferably an impeller pump, the feed facilities for catalyst and monomer and the discharge device, i.e. generally the sedimentation legs. However, the reactor can also have more than two vertical tube sections, so that a meandering arrangement is obtained.

The solids content of the slurry may preferably be at least 30 wt.%, preferably from 30 to 55 wt.%, more preferably from 40 to less than 55 wt.% based on the total mass of the contents of the reactor. These high solids concentrations can be achieved by various means.

In one embodiment, the high solids concentration is achieved by the diameter of the cyclic reactor tube being varied by more than 10% based on the predominant reactor tube diameter. A widening of the reactor tube in the region of the axial pump necessitated by the construction should not be taken into consideration here, since such a widening serves primarily to accommodate the axial pump, particularly the impeller of an impeller pump, in the reaction tube and highly turbulent flow prevails in this region in any case. Contrary to the prevailing opinion, deliberate nonuniform flow of the polymerization mixture in the region of the reaction tube even outside the region of the axial pump makes it possible to increase the solids concentration in the reactor. This effect appears without wishing to be tied to this hypothesis, to be based on more effective mixing of the heterogeneous reaction mixture. In particular, the monomer fed in, e.g. ethylene, is apparently dispersed more quickly in the reaction mixture, is dissolved more quickly in the suspension medium and is available to a greater degree for the polymerization. The removal of the heat of reaction also appears to be aided, since the disturbance of the flow increases motion perpendicular to the flow direction, i.e. in the direction of the cooled reactor wall, which occurs to only a very limited extent in the case of uniform plug flow.

In addition or alternatively, a high reactor density can also be achieved by other measures, for example by selection of a particularly suitable catalyst.

The polymerization can be carried out using all customary olefin polymerization catalysts, whereby the median mass diameter D₅₀ is less than 30 µm, preferably from 5 µm and 30 µm, more preferably between 5 µm and 20 µm, in particular between 8 µm and 18 µm. That means the polymerization can be carried out, for example, using Phillips catalysts based on chromium oxide, using titanium-based Ziegler- or Ziegler-Natta-catalysts, using single-site catalysts, or using mixtures of such catalysts. For the purposes of the present disclosure, single-site catalysts are catalysts based on chemically uniform transition metal coordination compounds. Furthermore, it is also possible to use mixtures of two or more of these catalysts for the polymerization of olefins. Such mixed catalysts are often designated as hybrid catalysts. The preparation and use of these catalysts for olefin polymerization are generally known.

Preferred catalysts are of Ziegler type, preferably comprising a compound of titanium or vanadium, a compound of magnesium and optionally an electron donor compound and/or a particulate inorganic oxide as a support material.

Catalysts of the Ziegler type are usually polymerized in the presence of a cocatalyst. Preferred cocatalysts are organometallic compounds of metals of Groups 1, 2, 12, 13 or 14 of the Periodic Table of Elements, in particular organometallic compounds of metals of Group 13 and especially organoaluminium compounds. Preferred cocatalysts are for example organometallic alkyls, organometallic alkoxides, or organometallic halides.

Preferred organometallic compounds comprise lithium alkyls, magnesium or zinc alkyls, magnesium alkyl halides, aluminum alkyls, silicon alkyls, silicon alkoxides and silicon alkyl halides. More preferably, the organometallic compounds comprise aluminum alkyls and magnesium alkyls. Still more preferably, the organometallic compounds comprise aluminum alkyls, most preferably trialkylaluminum compounds or compounds of this type in which an alkyl group is replaced by a halogen atome, for example by chlorine or bromine. Examples of such aluminum alkyls are trimethylaluminum, triethylaluminium, tri-isobutylaluminum, tri-n-hexylaluminium or diethylaluminium chloride or mixtures thereof.

Alternatively, the process of the present disclosure may be carried out using a chromium catalyst, preferably a Phillips-type chromium catalyst. Phillips-type chromium catalysts are preferably prepared by applying a chromium compound to an inorganic support and subsequently activating the obtained catalyst precursor, preferably in the presence of oxygen or air, at temperatures in the range from 350°C to 1000°C, resulting in chromium present in valences lower than six being converted into the hexavalent state. Apart from chromium, further elements such as magnesium, calcium, boron, aluminum, phosphorus, titanium, vanadium, zirconium or zinc can also be used. Particular preference is given to the use of titanium, zirconium or zinc in combination with chromium. Combinations of the above mentioned elements are also possible. The catalyst precursor can be doped with fluoride prior to or during activation. As supports for Phillips-type catalysts, which are also known to those skilled in the art, aluminum oxide, silicon dioxide (silica gel), titanium dioxide, zirconium dioxide or their mixed oxides or cogels, or aluminum phosphate may be used. Further exemplary support materials can be obtained by modifying the pore surface area, e.g. by means of compounds of the elements boron, aluminum, silicon or phosphorus. Preference is given to using a silica gel. Preference is given to spherical or granular silica gels, with the former also being able to be spray dried. Further suitable support materials can be obtained by chemical modification of inorganic support materials e.g. by means of compounds of the elements boron, aluminum, silicon or phosphorus. The activated chromium catalysts can subsequently be prepolymerized or prereduced. The prereduction can, for example, be carried out by means of carbon monoxide, hydrogen, ethylene, 1-olefins or metal alkyls.

Preferably, the catalyst is a chromium type catalyst as described above.

For the present purposes, the average solids concentration is the solids concentration in the reaction tube. Even higher solids concentration can be observed in the discharge system, whether continuous or discontinuous, due to sedimentation.

The high solids concentrations can be achieved even without continuous discharge of the polymer product. One variant of the process makes use of a discontinuous discharge and a high solids concentration.

The fraction may particularly have a minimum ignition energy of more than 30 mJ, preferably more than 100 mJ, more preferably more than 1000 mJ. The minimum ignition energy value is used to assess the likelihood of ignition during processing and handling. The fraction may form a dust cloud during storage and/or processing, which may ignite due to static electricity, electric spark, mechanical heat surface, friction and other ignition sources. This may lead to a dust explosion. By making sure that the fraction has a minimum ignition energy of more than 30 mJ, preferably more than 100 mJ, more preferably more than 1000 mJ a safe handling and processing can be ensured.

The polymer powder may particularly have a median diameter D₅₀ of from 120 to 400 µm. It has been found that such a polymer powder without the formation of fines or large aggregates can be easily processed. In particular, the combination of the small particles and high powder bulk density may lead to a better powder discharge, especially when utilizing sedimentation legs. Furthermore, having smaller polymer particle sizes allow for better and easier homogenization of the polyethylene resins during further processing, such as extrusion, leading to a lower generation of gels.

Preferably, the polymer powder has a high powder bulk density of more than 400 g/l. In particular, the powder bulk density may be from 400 g/l to 800 g/l, preferably from 500 g/l and 700 g/l.

The technology is illustrated below with the aid of examples, without being restricted thereto.

### EXAMPLES

### Test Methods

The term "D₅₀" refers to the particle size of the median diameter or the median particle size. Catalyst particle size and particle size distribution were obtained by the methods defined in ISO 13320-2009 together with ISO 9276-1, 9276-2, 9276-4 ISO 14887 and 14488.

The particle size of the polymer powder is determined analogously to DIN 53477 via sieving 1.5 ton of the produced polymer powder. It has been found that a more accurate determination of the particle size may be achieved, in particular in view of the very fine particle sizes of lower than 125 µm, in particular 63 µm or lower than 32 µm, when using a minimum amount of 1.5 ton as sample size.

The terms "high-density polyethylene" or "HDPE" are used interchangeably to mean ethylene homopolymers and ethylene copolymers produced in a gas phase and/or slurry phase polymerization and having a density in the range of 0.940 g/cm³ to 0.970 g/cm³. The density was determined according to DIN EN ISO 1183-1:2004, Method A (Immersion) with compression molded plaques of 2 mm thickness. The compression molded plaques were prepared with a defined thermal history: Pressed at 180°C, 20MPa for 8 min with subsequent crystallization in boiling water for 30 min.

The "ash content" is determined by weighting the ashes after polymer incineration took place in a microwave combustion furnace at 800°C for 10 minutes.

The term "powder density" or "bulk density" describes the mass of the powder particles divided by the bulk volume. It is determined according to DIN 53468, measured on the polymer powder.

The term "minimum ignition energy" describes the lowest electrical energy stored in a capacitor, which, when discharged is sufficient to trigger the ignition of the most sensitive dust/air mixture, under specified test conditions. The minimum ignition energy depends strongly on the nature of the dusts, such as the composition, the particle size distribution, the surface structure and the moisture. The minimum ignition energy is determined in a Hartmann pipe in accordance with DIN EN ISO 80079-20-2. For this purpose, the test object is fed into the Hartmann pipe and whirled up with compressed air. It is tested whether the whirled test object can be ignited with a spark ignition with an ignition energy of > 1 J or with a filament ignition with an ignition energy of > 10 J. Flame detachment from the ignition source is considered ignition. The concentration in the Hartmann tube can be gradually varied between 100 g/m³ and 4000 g/m³. The minimum ignition energy is measured on a fraction of the polyethylene powder having a particle size of <125µm obtained from sieving 1.5 t of polymer powder.

According to their minimum ignition energy (MIE), dusts in the areas of the minimum ignition energy are classified as:
- MIE > 10 mJ as normally sensitive to ignition;
- 10 mJ > MIE > 3 mJ as particularly sensitive to ignition;
- MIE < 3 mJ as extremely sensitive to ignition.

To characterize the test object, the residual moisture and other volatile components are determined. For this purpose, the test object is dried in the Sartorius MA100C infrared moisture meter at a freely selectable temperature in the range of 80-120 °C until weight constancy is reached.

### Examples

### (1) Preparation of the catalyst

### Comparative Example A (CE A) :

Catalyst precursor of example CE A was prepared in accordance with 1.1 and 1.2 for catalyst precursor of EP0589350B1, to produce a support with a D₅₀ of 135µm.

### Comparative Example B (CE B) :

Catalyst precursor of example CE B was prepared according to example 4a of EP1784432B1 using spray dried spherical silica (Sylopol from Grace) with a pore volume of 1,6 ml/g and a surface area 320 m²/g measured by BET and a D₅₀ of 35µm.

### Inventive Example 1-3 (E1, E2, E3):

Catalyst precursor of example E1, E2 and E3 was prepared according to example 4a of EP1784432B1 using spray dried spherical silica with a pore volume of 1,6 ml/g and a surface area 320m²/g measured by BET and a D₅₀ of 28, 14 and 12 µm respectively.

### (2) Activation

The activation of the catalyst precursor from step (1) was carried out at from 520 to 850° C. 2.5% by weight of ammonium hexafluorosilicate (ASF), based on the total mass of the catalyst precursor, were added in powder form. For the activation, the catalyst precursor was heated to the desired activation temperature, held at this temperature for 5 hours and subsequently cooled, with cooling below a temperature of 350° C being carried out under nitrogen in a fluidized bed activator with an external cyclone to remove the extreme fine particles. The gas flow to the activator is reduced by about 20-30% accordingly to prevent too high catalyst carry over. The precise conditions are shown in Table 1.

### (3) Polymerization

The polymerizations were carried out as suspension processes in isobutane in a 32 m³ PF loop reactor. The melt flow rate (MFR) and the density were set via the hexene concentration or ethene concentration and reactor temperature. Polymerization was carried out at reactor temperatures of from 99° C. to 107° C. The reactor pressure was 4.2- 4.5 MPa. The polymerization conditions are summarized in Table 1.

| Example No | | CE A | CE B | E1 | E2 | E3 |
|---|---|---|---|---|---|---|
| Activation temp. | [°C] | 580 | 640 | 580 | 640 | 640 |
| Catalyst D₅₀ | [µm] | 130 | 35 | 28 | 14 | 12 |
| Reactor pressure | [MPa] | 4.20 | 4.30 | 4.55 | 4.55 | 4.55 |
| Reactor Temperature | [°C] | 102-104 | 105 | 103.9 | 103.1 | 102.9 |
| Ethene | [%Vol.] | 9.0 | 11.0 | 14.9 | 15.1 | 14.8 |
| Ethane | [%Vol.] | 1.4 | 4.6 | 2.9 | 2.1 | 1.8 |
| Solids content reactor | [wt.%] | 57 | 48 | 50 | 51 | 53 |
| Hexene | [%Vol.] | 0 | 0 | 0 | 0 | 0 |
| Output | [kg/h] | 5100 | 5800 | 7500 | 7900 | 8400 |
| IC4 | [kg/h] | 4600 | 4900 | 3900 | 3900 | 3700 |
| IC4/PE discharge Ratio | | 0.9 | 0.84 | 0.52 | 0.49 | 0.44 |
| Space time yield | [kg/(m³h)] | 159 | 181 | 234 | 247 | 262 |
| PE Fraction (<500) µm) | [wt.%] | 63.6 | 37.2 | 96.6 | 97.4 | 98.2 |
| PE Fraction (<32µm) | [wt.%] | 1.0 | 0.4 | 0.1 | 0 | 0.1 |
| PE Fraction (32µm<PE<63 µm) | [wt.%] | 2.6 | 0.7 | 0.8 | 1 | 1.1 |
| PE Fraction (63 µm<PE<125 µm) | [wt.%] | 5.1 | 1.1 | 8.7 | 9.2 | 9.8 |
| PE Fraction (125< PE<250) µm) | [wt.%] | 18.5 | 6.0 | 47.4 | 50.1 | 58.6 |
| PE Fraction (250< PE<500) µm) | [wt.%] | 36.4 | 29 | 39.6 | 37.1 | 28.6 |
| PE Fraction (>1000) µm) | [wt.%] | 11.4 | 26.3 | 0.9 | 0.7 | 0.0 |
| PE Fraction (>2000) µm) | [wt.%] | 0.5 | 0.9 | 0.0 | 0.1 | 0.0 |
| Powder Bulk Density | [g/l] | 495 | 489 | 545 | 557 | 565 |
| Minimum ignition energy (MIE) * | [mJ] | <30 | - | >300 | >100 | >100 |
| Ash content (at 800°C) | [ppm] | 350 | 310 | 180 | 245 | 232 |
| Polymer density | [g/cm³] | 0.954 | 0.953 | 0.953 | 0.954 | 0.954 |

With respect to Comparative Example A, polymerization with a typical catalyst was performed at optimized reactor density to allow high reactor output. However reactor temperature was not as stable for lower reactor solid densities. The polyethylene powder which was produced wherein the fraction of less than 125 µm has a low minimum ignition energy of less than 30 mJ. Polymer powders from slurry polymerization processes are usually conveyed in air. As these powders are loaded with suspension medium, i.e. propane, isopentane, isobutane, hexane, octane and optionally comonomers, these kind of powders are prone to build hybrid mixtures containing hydrocarbons and powder, which are considered to reduce the MIE of the conveyed powders significant. Therefore, a safe powder handling cannot be ensured by the powder of comparative example A. There is a considerable risk of dust explosion during production and transfers of the powders in manufacturing facilities as well as processing of the powders for blow moulding, sintering or other processes.

Comparative Example A exhibited fluctuations in the process conditions due to a high amount of fines having a particle size of less than 32 µm leading to a shutdown of the process. Most critical accumulation of fines were seen at filter bags as the fine powder particles are easily charged and stick at the bag producing a much finer powder than it is usually processed.

With Comparative Example B it was possible to run the polymerization under stable conditions, with a very low amount of fines particles. However, the relatively broad particle size distribution and the relatively high amount of powder particles having a particle size larger than 500 µm leads to a powder that is difficult to further process, e.g. via sintering, leading to long processing times and inhomogeneities.

Examples 1, 2 and 3 show powders with a relatively large fraction of particles with a particle size between 125 µm and 250 µm. Furthermore, the powder has a relatively high amount of powders lower than 63 µm but an MIE of more than 300 or 100, respectively. This is believed to be due to a low amount of powder particles in the fraction of less than 125 µm having a particle size of less than 32 µm. The high MIE allows for a safe handling, processing and transport of the powders. The process ran stably with a high output, high space time yield and a low IC4/PE discharge ratio showing that the powder can be efficiently produced.

## Claims

1. A process for preparing a polymer powder in the presence of a polymerization catalyst in a slurry, the polymer powder being an ethylene homo-or copolymer;
- whereby at least 70 wt.%, preferably at least 80 wt.% of the produced polymer powder particles have a particle diameter of less than 500 µm,
- wherein at least 40 wt.% of the produced polymer powder particles have a particle diameter from 125 µm to 250 µm;
- wherein less than 2.0 wt.%, preferably less than 1.5 wt.% of the produced polymer powder particles have a particle diameter of less than 63 µm;
- wherein the polymerization catalyst has a median mass diameter D₅₀ of less than 30 µm.

2. The process of claim 1, wherein polymer powder has a powder bulk density of more than 400 g/l, preferably more than 500 g/l.

3. The process of claim 1 or 2, wherein the slurry has a solids content of at least 30 wt.% up to 55 wt.%.

4. The process of any one of claims 1 to 3, wherein the production rate of the polymer is at least 6 t/h.

5. The process of any one of claims 1 to 4, wherein the polymer powder is produced in at least two slurry reactors arranged in series.

6. The process of any one of claims 1 to 5, wherein the polymer powder is produced in at least one slurry loop reactor.

7. The process of any one of claims 1 to 6, wherein the polymerization catalyst is a chromium type catalyst.

8. The process of any one of claims 1 to 7, wherein the polymerization has a space time yield of at least 200 kg/m³h.

9. The process of any one of claims 1 to 8, wherein the polymer powder has an ash content of less than 300 ppm.

10. The process of any one of claims 1 to 9, wherein a fraction of the polyolefin powder particles has a minimum ignition energy of more than 30 mJ, preferably more than 100 mJ, the fraction being composed of polyolefin powder particles having a diameter of less than 125 µm.

11. The process of any one of claims 1 to 10, wherein a discharge ratio of liquid medium to polyethylene is lower than 0.8, preferably lower than 0.7.

12. A polyethylene powder obtainable by polymerization in slurry, the polymer powder being an ethylene homo-or copolymer;
- whereby at least 70 wt.%, preferably at least 80 wt.% of the polymer powder particles have a particle diameter of less than 500 µm,
- wherein at least 40 wt.% of the polymer powder particles have a particle diameter from 125 µm to 250 µm;
- wherein less than 2.0 wt.%, preferably less than 1.5 wt.% of the polymer powder particles have a particle diameter of less than 63 µm.

13. The polyethylene powder of claim 12, wherein a fraction of the polymer powder particles being composed of the polymer powder particles having a particle size of less than 125 µm has a minimum ignition energy of at least 30 mJ, preferably at least 100 mJ.

14. The polyethylene powder according to claim 12 or 13, wherein the polyethylene powder has a powder bulk density of at least 400 g/l.

15. A polyethylene obtained by processing a polyethylene powder according to any one of claims 12 to 14.
